# EUROPEAN PATENT SPECIFICATION

(11) **EP 0 750 155 B1**
(45) Date of publication and mention of the grant of the patent: **26.05.1999**
(21) Application number: 96304571.1
(22) Date of filing: 20.06.1996
(51) Int. Cl.: F16L 41/02

(54) **T-connector**
T-Kupplung
Té de raccordement

(30) Priority: 20.06.1995 GB 9512513
(43) Date of publication of application: 27.12.1996
(73) Proprietor: Guest, John Derek, Maidenhead, Berkshire SL6 2RX (GB)
(72) Inventor: Guest, John Derek, Maidenhead, Berkshire SL6 2RX (GB)
(74) Representative: Bayliss, Geoffrey Cyril

(56) References cited:
- EP-A- 0 351 466
- EP-A- 0 550 323
- US-A- 2 823 807

## Description

This invention relates to T-connectors and in particular to T-connectors for coupling a branch connection in a mains airline supply.

Mains airlines are commonly installed in buildings such as factories or in specific machines comprising horizontal runs of pipelines from the source of air pressure usually a motor driven compressor and branch connections are provided in the airline at specific locations where air pressure supplies are required. Usually, such branch connections take the form of "swan-neck" connections, leading from the top of the airline so that if any moisture has accumulated in the airline typically by condensation from the compressor, it does not enter the branch line and pass to the equipment to which the air is applied where it could do damage. It is not always convenient to use swan neck connectors because there may not be space above the airline which the swan neck can occupy.

US-A-2823807 discloses a T-shaped connector for use in a sprinkler system comprising a casing having a lined threaded opening and a cross-piece of the T to receive threaded pipes and a threaded opening in the leg of the T in which a riser unit is mounted with a threaded bore to receive a further threaded pipe. The riser unit has a tubular portion extending upwardly towards the top of the casing but stopping short of the upper sides of the tubes connected to the casing. Thus when the liquid level rises in the tubes above the top of the riser, the liquid will flow into the riser.

An object of the present invention is to provide a T-form connector for an airline which can extend from the bottom of the airline but avoids the risk of allowing liquid in the airline to enter the branch conduit. There is also a need for a suitable connector which can separate flows of water and air containing a 'mist' of air containing moisture for irrigation purposes.

This invention provides a T-connector for a branch connection in a main supply line for gas/liquids according to claim 1.

Preferably the leg extension comprises a stepped sleeve having a large diameter portion engaged in the top of the leg and a small diameter portion projecting upwardly across the throughway in the cross-piece into the internal cavity with an entry port at its upper end.

In any of the above arrangements the cross-piece may have open ends in which collet form tube locking devices are located to receive and lock tubes forming the mains air-line in the ends of the cross-piece and the leg of the coupling body has an open end in which a collet form tube locking device is mounted to receive and lock a tube therein forming the branch line.

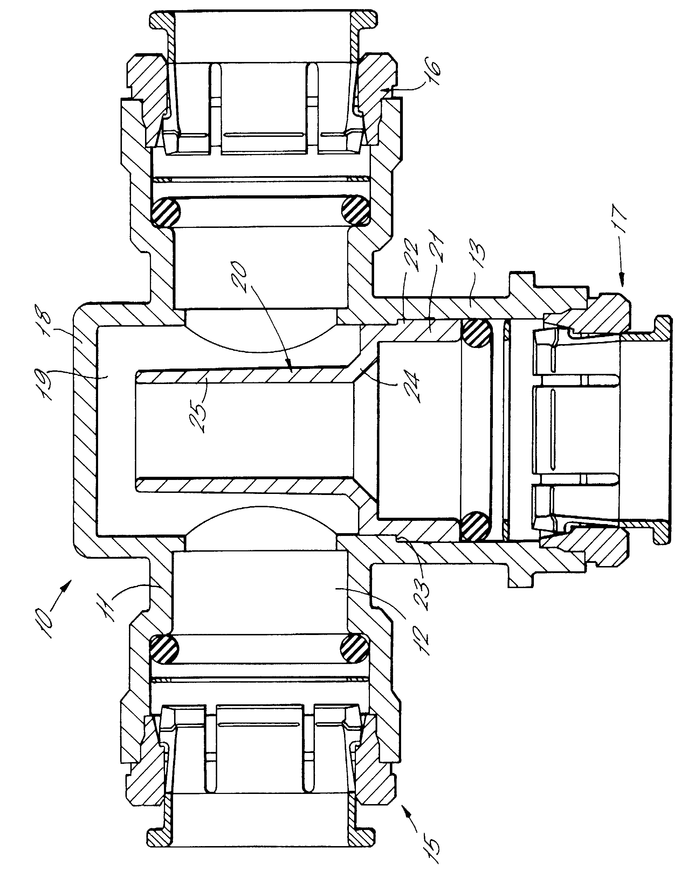

The following description of the specific embodiment of the invention, reference being made to the accompanying drawing which is a sectional view through a T-connector for coupling a branch line to a mains airline.

Referring to the drawings, there is shown a T-connector indicated generally at 10 comprising a cross-piece 11 having a throughway 12 for coupling in a mains airline which is not shown. The connector has a central downwardly extending integral leg 13 for coupling to a branch by a tube also not shown. The end of the cross-piece 11 and leg 13 are provided with collet form tube coupling devices indicated generally at 15, and 17 respectively for connecting tubes or pipes thereto.

The cross-piece 11 of the connector body opposite the branch 13 is formed with an upstanding hollow boss 18 providing an inner cavity 19 directly opposite the branch 13.

A stepped sleeve indicated generally at 20 has an enlarged lower portion 21 which is fitted in the open end of the top of the branch leg 13. The inner diameter of the branch 13 is reduced at a downwardly facing shoulder 22 towards its upper end and the outer surface of the lower portion 21 of the sleeve is reduced in diameter at an outwardly facing step 23 which engages with step 22. To locate the lower part of the sleeve in the upper end of the branch leg 13 as illustrated. The larger diameter lower portion 21 of the sleeve gives away at an annular shoulder 24 to the smaller diameter upper sleeve 25 which extends with clearance around the throughway 12 in the cross-piece upwardly into the cavity 19 in the upstanding boss. The upper end of the sleeve 25 lies above the upper side of the cross-piece 11 of the connector and the adjacent airline.

Thus, if moisture accumulates in the airline from any source and enters the connector, the stepped sleeve 21, 25 prevents such moisture from entering the branch leg 13 and thereby reaching the apparatus to which the branch is connected. Since the top of the stepped sleeve 25 is above the level of the airline, water cannot enter the branch passage whatever level it may reach in the airlines.

In another application of the invention, the T-connector is coupled in a main line for carrying a combination of water and air for irrigation purposes. Water is prevented from entering the branch line but air carrying a 'mist' of water can enter the branch line for delivery to a site to be irrigated thereby.

## Claims

1. A T-connector for a branch connection in a main supply line for gas/liquids comprising a cross-piece (11) provided with a throughway (12) for the main supply line and a leg (13) having a throughway for a branch line, the leg and cross-piece ends being adapted to receive tubes forming the main and branch lines, the cross-piece of the connector having an upstanding head portion (18) disposed opposite the leg providing an internal cavity (19) and the leg having an extension (20) projecting upwardly from the upper end of the leg across the throughway; characterised in that the extension projects into the cavity and has an entry port at its upper end disposed within the cavity above the upper side of the cross-piece (11) to permit gas through the cross-piece and into the leg whilst preventing any liquid flowing or accumulated in the throughway from entering the leg and thereby the branch line coupled to the leg.

2. A T-connector as claimed in claim 1,
characterised in that the leg extension comprises a stepped sleeve (21, 25) having a larger diameter portion (21) engaged in the top of the leg (13) and a smaller diameter portion (25) projecting upwardly across the throughway (12) into the internal cavity (19) in said head portion with said entry port at its upper end.

3. A T-connector as claimed in claim 1 or claim 2,
characterised in that the ends of the cross-piece (11) and the leg (13) of the connector have push-in coupling devices (15, 16, 17) for receiving tubes forming the main and branch lines.

4. A T-connector as claimed in claim 3,
characterised in that the cross-piece has open ends in which collet form tube locking devices (15, 16) are located to receive and lock tubes forming the main line in the ends of the cross-piece and the leg (13) of the coupling body has an open end in which a collet form tube locking device (17) is mounted to receive and lock a tube therein forming the branch line.

## Patentansprüche

1. T-Kupplung für einen Abzweigungsanschluß an einer Hauptleitung für Gas-/Flüssigkeit, mit einem Querstück (11) mit einem Durchlaß (12) für die Hauptleitung und einem Schenkel (13) mit einem Durchlaß für eine Abzweigleitung, wobei die Enden des Schenkels und des Querstücks zur Aufnahme von die Hauptleitung und Abzweigleitung bildenden Rohren angepaßt sind, wobei das Querstück der Kupplung gegenüber dem Schenkel einen hochstehenden Kopfteil (18) aufweist, der einen Innenraum (19) bildet, und wobei der Schenkel einen Fortsatz (20) aufweist, der von dem oberen Ende des Schenkels quer über den Durchlaß nach oben ragt, dadurch **gekennzeichnet**, daß der Fortsatz in den Hohlraum hineinragt und an seinem oberen Ende eine Eintrittsöffnung aufweist, die innerhalb des Hohlraums oberhalb der oberen Seite des Querstücks (11) angeordnet ist, um Gas durch das Querstück in den Schenkel durchzulassen, aber in dem Durchlaß fließende oder angesammelte Flüssigkeit am Eintreten in den Schenkel und damit in die mit dem Schenkel verbundene Abzweigleitung zu hindern.

2. T-Kupplung nach Anspruch 1,
dadurch **gekennzeichnet**, daß der Fortsatz des Schenkels ein gestuftes Rohr (21, 25) aufweist, mit einem Abschnitt (21) größeren Durchmessers, der im oberen Teil des Schenkels (13) aufgenommen ist, und einem Abschnitt (25) kleineren Durchmessers, der nach oben quer über den Durchlaß (12) in den inneren Hohlraum (19) des Kopfteils hineinragt und an seinem oberen Ende die Eintrittsöffnung aufweist.

3. T-Kupplung nach Anspruch 1 oder 2,
dadurch **gekennzeichnet**, daß die Enden des Querstücks (11) und der Schenkel (3) der Kupplung Einsteck-Kupplungsvorrichtungen (15, 16, 17) zur Aufnahme von die Hauptleitung und Abzweigleitung bildenden Rohren aufweisen.

4. T-Kupplung nach Anspruch 3,
dadurch **gekennzeichnet**, daß das Querstück offene Enden hat, in denen Rohrarretiereinrichtungen (15, 16) in Form von Klemmringen angeordnet sind zum Aufnehmen und Arretieren von die Hauptleitung bildenden Rohren in den Enden des Querstücks, und daß der Schenkel (13) des Kupplungsgehäuses ein offenes Ende hat, in dem eine Rohrarretiereinrichtung (17) in Form eines Klemmrings gelagert ist zur Aufnahme und Arretierung eines die Abzweigleitung bildenden Rohres.

## Revendications

1. Té de raccordement pour un raccordement de branchement dans une conduite d'alimentation principale pour les gaz/liquides comprenant une pièce transversale (11) munie d'un passage (12) pour la conduite d'alimentation principale et une branche (13) ayant un passage pour une conduite de branchement, les extrémités de la branche et de la pièce transversale étant adaptées pour recevoir des tubes formant les conduites principale et de branchement, la pièce transversale du raccord ayant une partie supérieure droite (18) disposée à l'opposé de la branche, ménageant une cavité interne (19) et la branche ayant un prolongement (20) faisant saillie vers le haut depuis l'extrémité supérieure de la branche dans le passage ; caractérisé en ce que le prolongement fait saillie dans la cavité et présente un orifice d'admission au niveau de son extrémité supérieure disposé à l'intérieur de la cavité au-dessus du côté supérieur de la pièce transversale (11) pour permettre le passage des gaz dans la pièce transversale et dans la branche tout en empêchant tout liquide s'écoulant ou accumulé dans le passage de pénétrer dans la branche et ainsi, dans la conduite de branchement couplée à la branche.

2. Té de raccordement selon la revendication 1, caractérisé en ce que le prolongement de la branche comprend un manchon en gradins (21, 25) ayant une partie de diamètre plus importante (21) insérée dans la partie supérieure de la branche (13) et une partie de diamètre moins importante (25) faisant saillie vers le haut dans le passage (12) dans la cavité interne (19) à l'intérieur de ladite partie supérieure, ledit orifice d'admission étant placé à son extrémité supérieure.

3. Té de raccordement selon la revendication 1 ou la revendication 2, caractérisé en ce que les extrémités de la pièce transversale (11) et la branche (13) du raccord présentent des dispositifs d'accouplement à emboîtement (15, 16, 17) destinés à recevoir les tubes formant les conduites principale et de branchement.

4. Té de raccordement selon la revendication 3, caractérisé en ce que la pièce transversale présente des extrémités ouvertes dans lesquelles sont placés des dispositifs de verrouillage de tube sous forme de bague de serrage (15, 16) pour recevoir et verrouiller des tubes formant la conduite principale dans les extrémités de la pièce transversale et la branche (13) du corps de couplage présente une extrémité ouverte dans laquelle un dispositif de verrouillage de tube sous forme de bague de serrage (17) est monté pour recevoir et verrouiller un tube à l'intérieur, formant la conduite de branchement.
